(19) Europäisches Patentamt / European Patent Office / Office européen des brevets

(11) **EP 1 874 058 A2**

## (12) EUROPEAN PATENT APPLICATION

(43) Date of publication:
**02.01.2008 Bulletin 2008/01**

(51) Int Cl.:
*H04N 7/26* (2006.01)     *H04N 7/50* (2006.01)

(21) Application number: **07252586.8**

(22) Date of filing: **26.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **26.06.2006 US 816722 P**
**05.06.2007 US 758590**

(71) Applicant: **Genesis Microchip, Inc.**
**Santa Clara, CA 95054 (US)**

(72) Inventors:
• **Tang, Tianhua**
**San Jose, CA 95125 (US)**
• **Swartz, Peter**
**San Jose, CA 95120 (US)**
• **Dong, Xu**
**San Jose, CA 95135-1271 (US)**

(74) Representative: **Brown, George Laurence**
**Urquhart-Dykes & Lord LLP**
**Tower North Central**
**Merrion Way**
**Leeds LS2 8PA (GB)**

(54) **Adaptive reduction of local MPEG artifacts**

(57) Disclosed herein are methods and apparatus, including computer program products, implementing and using techniques for reducing mosquito noise and blockiness in an image frame of a video signal. A border of a pixel block is determined, and if the region surrounded by the border is determined to be associated with mosquito noise or blockiness, then the mosquito noise or blockiness, respectively, is reduced in the region only.

**EP 1 874 058 A2**

**Description**

This invention generally relates to improving video and graphics quality.

MPEG compression is a widely used algorithm for digital video signal transmission and storage. MPEG encoded and decoded streams of video can be used in various applications including cable television, satellite television, and digital video discs (DVD).

The content of a video signal generally comprises a sequence of image frames for a progressive video sequence and image fields for an interlaced video sequence. Each frame/field consists of a rectangular spatial area of pixels. When video content is encoded using MPEG, generally an 8X8 window of pixels (64 pixels) in an image frame of the video signal is processed as follows. First, a Discrete Cosine Transform (DCT) is applied to the window to generate a 2-D spatial spectrum representation of the 8X8 window. This 2-D spatial spectrum is often referred to as a Fourier image, as it is a representation of the image in the Fourier domain. The Fourier image also has 64 pixels. The pixel values in the Fourier image represent a DC component and various frequencies or AC components. The DC component is generally situated in a top left corner pixel of the Fourier image. The other 63 pixels in the Fourier image represent the AC components. After generating the Fourier image, an MPEG encoder quantization is applied so that all the 64 pixels in the Fourier image are quantized.

The MPEG-2 standard provides for intraframe compression. In a video sequence, neighboring image frames are grouped into one or more Groups of Pictures ("GOP"). In a GOP, one image frame is encoded spatially, namely the I-frame. For other frames, differences are encoded. There are two types of frames where differences are encoded: P-frame and B-frame. For a P-frame, the difference between a current frame and a modified by motion vectors I-frame is spatially encoded. For a B-frame, the difference between a current frame and a weighting sum of a modified by motion vectors I-frame and P-frame or two P-frames is spatially encoded. "Modified by motion vectors" means that the currently encoded P- (or B-) frame is split by 16x16 pixel squares, and for each square the best matched square located with some spatial offset from the reference frame is searched. The searching happens in some local area. The spatial offset (vertical and horizontal) for the best matching block is kept in the MPEG stream and called the motion vector. Each 16x16 block of P-frame has one motion vector, and the B-frame has two motion vectors. MPEG compression for an interlaced signal processes fields instead of frames.

When an image is decoded using MPEG and MPEG-2 standards, the image frame is converted back from the Fourier domain to the spatial domain. The encoding and decoding of image frames using MPEG compression causes artifacts to appear in a processed image frame. The compression ratio, i.e. bit rate used in the MPEG encoding and decoding defines the level and behavior of the artifacts. That is, the visually perceived effect of the artifacts is a function of the bit rate. In DCT process, the video signal is transformed into an array of component magnitudes (coefficients) corresponding to each of the DCT transform bases. In general, the components for the bases expressing low frequency, which are positioned towards the top of the figure, have large magnitudes. A relatively large amount of information is therefore allocated to these components while a relatively small amount of information is allocated to high-frequency components. This makes it possible to represent a video signal with less information overall than is used to represent the original signal sequence. On the decoding side, the video signal is reconstructed by performing a linear summation of the coefficient-weighted transform bases received from the coding side.

Because a picture signal has high correlation in both the horizontal and vertical directions, it is common practice to perform a two-dimensional DCT in these directions using a 8-pel-horizontal by 8-pel-vertical block. The DCT exhibits nearly optimal characteristics in the sense that it concentrates power in certain coefficients (coefficients corresponding to low-frequency bases), as described above. On the other hand, DCT can also be a cause of picture degradation due to features like block distortion and mosquito noise.

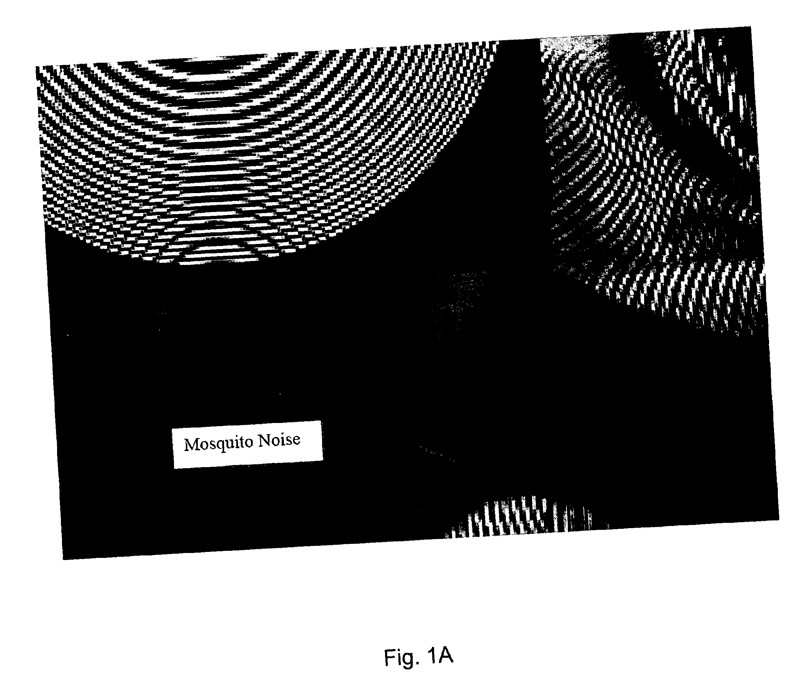

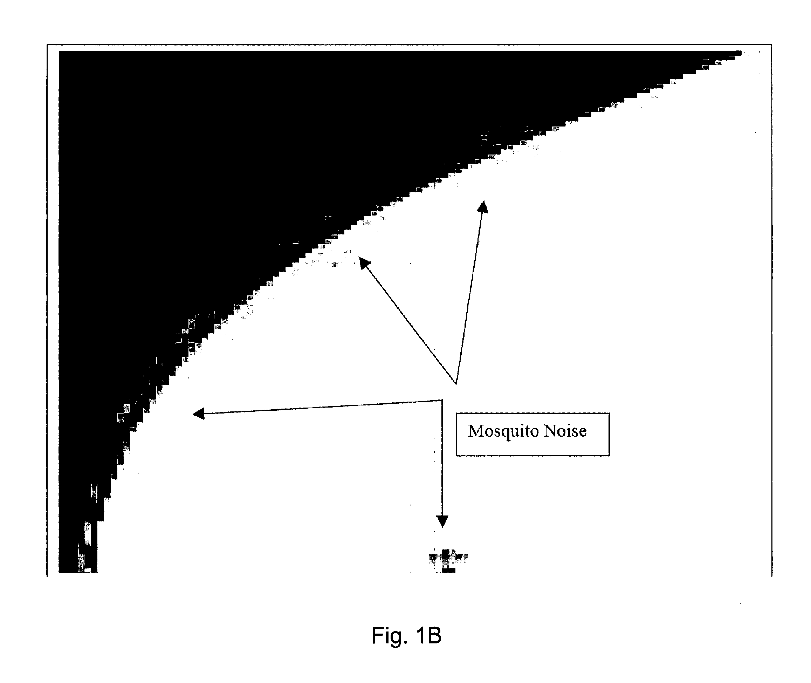

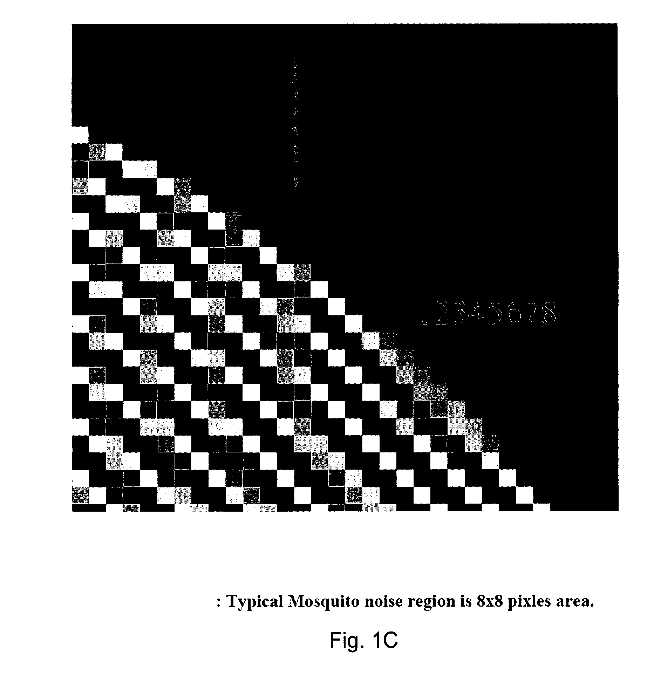

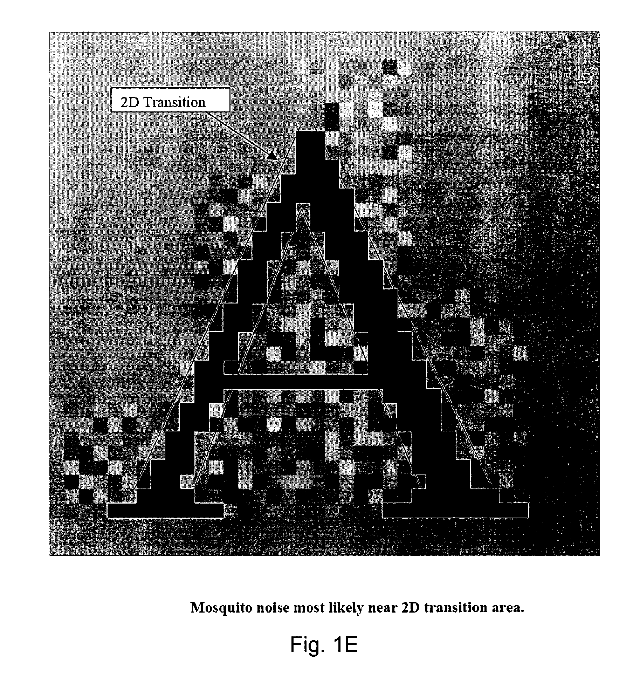

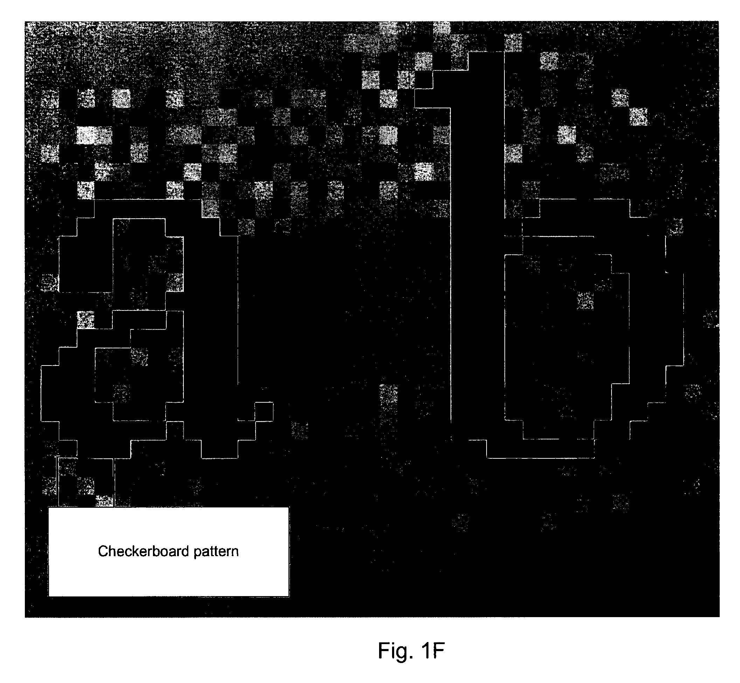

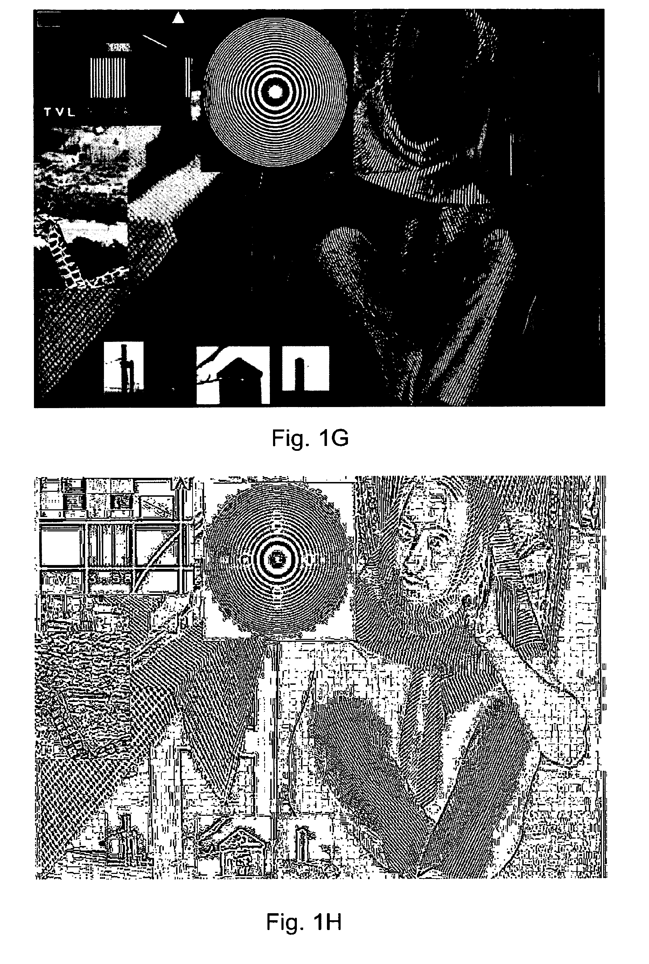

For bit rates greater than 2 Mbits/sec, the main artifact appearing at these and higher bit rates is mosquito noise (as illustrated in Fig. 1A). Mosquito noise is a high frequency pattern that appears inside a window or block of pixels particularly in a more or less flat area in the presence of a high edge in a neighborhood or any other high transition between pixel values. This kind of distortion is brought about by a coarse quantization of DCT coefficients so that the resulting block is represented by many zero DCT coefficients. Only a few DCT coefficients represent an originally complex block image. If the DCT coefficients are quantized to be zero, there is no way for inverse DCT (IDCT) to reconstruct the images without artifacts. MPEG2 artifacts are generated at the processing quantization. During quantization, a quantization-matrix is used as *divider* in quantization processing. Element of diagonal in quantization-matrix is bigger so that diagonal DCT coefficient is coarsely quantized. As result of these features, mosquito noise most likely appears near diagonal edge areas. The mosquito noise appears as a small checkerboard mixed with delta-impulse pattern that is clearly visible in areas within the window (see Figs. 1B thru IF).

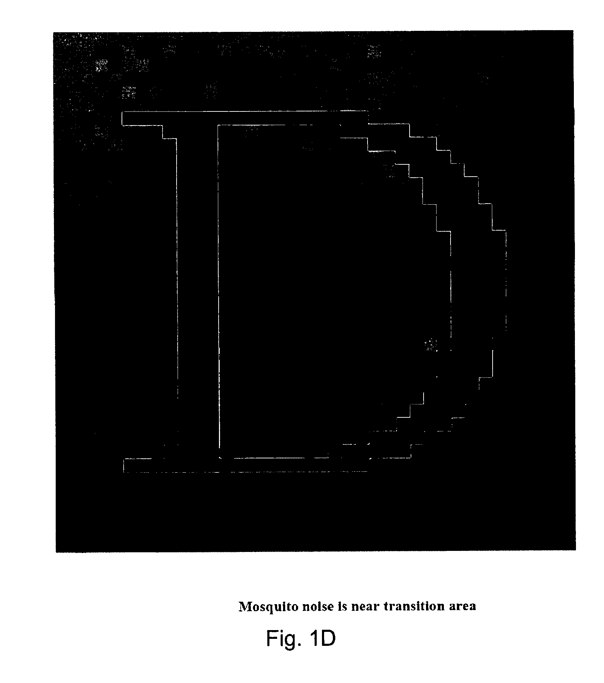

Mosquito noise becomes visible due to the uniform spatial distribution of quantization noise appearing in blocks which contain generally smooth areas in the presence of strong edges. The mosquito noise is perceptually visible in the smooth areas. Pure vertical and horizontal intrablock ringing is one type of the mosquito noise. Here, mosquito noise appears close to vertical and horizontal edges in the image frame. The mosquito noise caused by pure vertical or horizontal edges is less severe than that caused by diagonal structures, but is still visible as vertical and horizontal ringing of the edges. Since current noise processing is globally used to filter the video content, there is no way to reduce mosquito noise and keep the video from not being smoothed simultaneously (as illustrated in Fig. 1D that shows the impact of globally reducing mosquito noise of the image shown in Fig. 1A). As shown, the white pixels indicate that the difference of original and processed image is zero and dark pixels indicate that there is difference of original and processed images. Noise it makes for a larger area of small variation which is more visible to the user.

Therefore, what is needed is a technique for reducing MPEG artifacts such as locally removing mosquito noise instead of globally removing it as is currently.

A method of reducing mosquito noise of a video signal is described. The method is performed by determining a border of a block of pixels and if a region surrounded by the border has mosquito noise, then applying a mosquito noise reduction operation on the region.

In another embodiment, an apparatus for reducing mosquito noise of a video signal, is described. The apparatus includes means for determining a border of a block of pixels, and means for applying a mosquito noise reduction operation on the region if a region surrounded by the border has mosquito noise.

In still another embodiment, computer program product for reducing mosquito noise of a video signal is described. The computer program product includes computer code for determining a border of a block of pixels, computer code for applying a mosquito noise reduction operation on the region if a region surrounded by the border has mosquito noise, and computer readable medium for storing the computer code.

In yet another embodiment, a system for reducing mosquito noise of a video signal. The system includes at least an interface arranged to receive the video signal, and

a processor coupled to the interface arranged to execute instructions to determine a border of a block of pixels included in an image, and apply a mosquito noise reduction operation on the region if a region surrounded by the border has mosquito noise.

Embodiments of the invention will now be described by way of example with reference to the accompanying drawings, in which:

Figs. 1A - 1H illustrate various examples of mosquito noise.

Fig. 2 shows a block diagram of an apparatus for reducing detecting block borders and applying mosquito noise reduction.

Figs. 3A and 3B illustrate a comparison of mosquito noise reduction of conventional global mosquito noise reduction and local mosquito noise reduction in accordance with an embodiment of the invention.

Fig. 4 shows a comparison of a region N consistent with a noisy region and a region F consistent with a flat, or non noisy region.

Fig. 5 shows a first detection kernel in accordance with an embodiment of the invention.

Figs. 6 and 7 show the first detection kernel being used to detect mosquito noise.

Fig. 8 shows a second detection kernel in accordance with an embodiment of the invention.

Fig. 9 shows a composite detection kernel in accordance with an embodiment of the invention.

Fig. 10 illustrates a situation where the first detection kernel can not fully detect mosquito noise that is suitable for using the composite detection kernel.

Fig. 11 shows a representative detection protocol in accordance with an embodiment of the invention.

Figs. 12 -15 show left, right, top, and bottom regions in accordance with an embodiment of the invention.

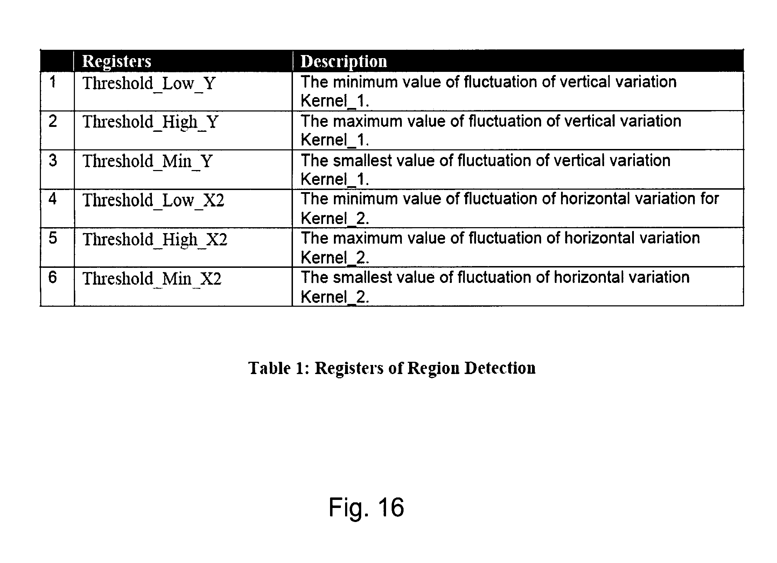

Fig. 16 shows a Table 1 delineating a list of edge detection threshold values in accordance with an embodiment of the invention.

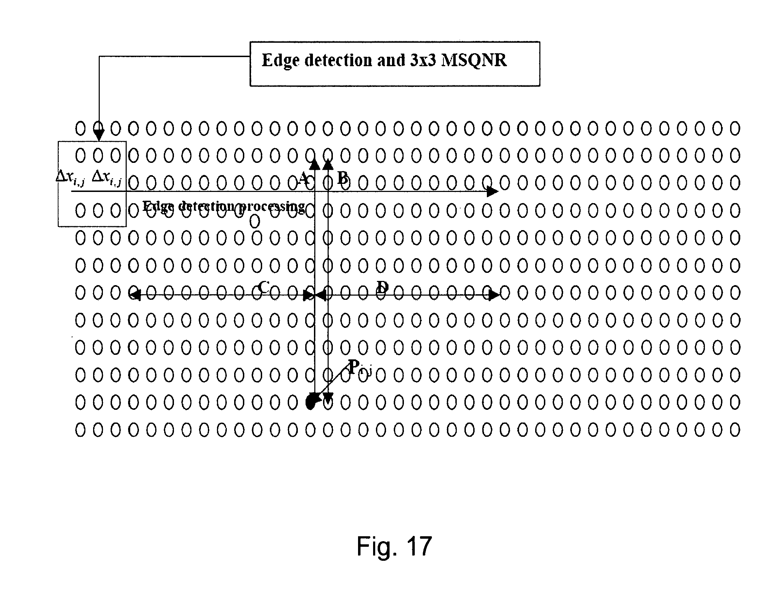

Fig. 17 shows an edge detection protocol in accordance with an embodiment of the invention.

Fig. 18 shows a Table 2 illustrating representative values in accordance with an embodiment of the invention.

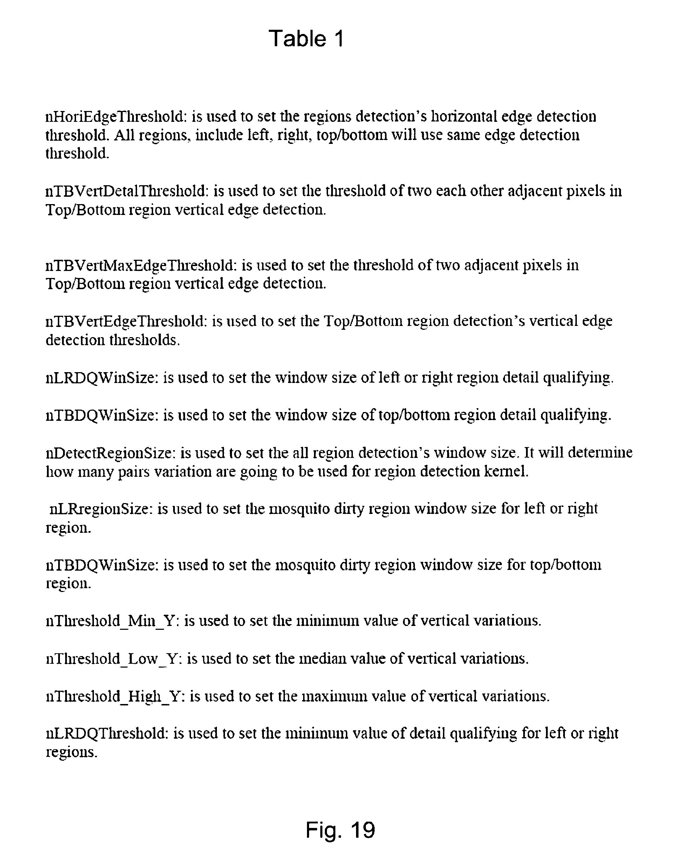

Fig. 19 shows a table of variables used in the described embodiment.

Like reference symbols in the various drawings indicate like elements.

Embodiments of the present invention provide methods, apparatus, including computer program products, for modifying pixel values in an image frame of a video signal to reduce artifacts in the image frame. The methods and apparatus described herein are generally performed in the context of MPEG compression in which intermediate and high bit rates are used, generally above 2 Mbits/sec. These techniques are particularly well suited for removing mosquito noise, including pure vertical and horizontal intrablock ringing, and flat area (DC) blocking artifacts.

The basic operation of reducing mosquito noise is low pass filtering. The drawback of this processing is that in order to reduce the noise the image details are also blurred. How to reduce mosquito noise without smoothing the video high frequency content is a challenge for video processing. Contrary to conventional approaches to applying the mosquito noise reducing filter globally, the invention uses the mosquito noise reducing filter (MNSRF) adaptively and locally to filter the mosquito noise. MPEG2 border detection is used to ascertain those regions requiring mosquito noise reduction where mosquito noise reduction processing is triggered only if the region is being detected as a mosquito noise region (i.e., region detection based mosquito noise reduction). The invention detects MPEG2 block borders. If the detected borders bound a region with mosquito noise, then a mosquito noise reducing filter operates on the flat region in the block. There are four situations, left, right, top, and bottom relative to the border with a clean block. For left regions noise reduction is performed until the first edge is detected, and stops after that. For right regions, noise reduction is only started once the last edge in the block is reached (scanning from left to right). For top and bottom situations, all pixels except where an edge exists are corrected.

A mosquito noise reduction module is provided to identify the mosquito noise component using MPEG2 border detection where mosquito noise reduction processing is triggered only if the region is being detected as a mosquito noise region. Noise level or brightness level comparison logic is used to determine the border of block which is controlled by several registers so the comparison logic are programmable.

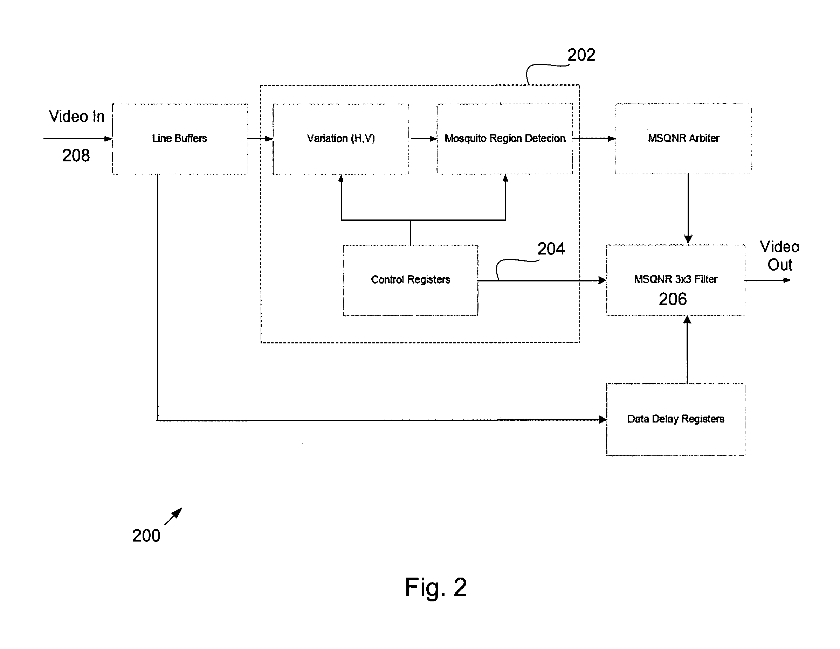

Fig. 2 shows an adaptive mosquito noise reduction system 200 in accordance with an embodiment of the invention. The apparatus 200 includes a mosquito noise region detector 202 that sets a flag 204 to turn on/off of mosquito noise reduction block 206. During operation, a video signal 208 is received at both the mosquito noise region detector 202 and the mosquito noise reduction block 206. If, and only if, the mosquito noise region detector 202 determines that a particular region of the video signal 208 requires mosquito noise reduction, the mosquito noise region detector 202 sets the flag 204, otherwise the flag 204 remains unset. When the flag 204 is set, then the mosquito noise reduction block 206 applies the mosquito noise filter to the video region identified as having mosquito noise. In this way, mosquito noise reduction is selectively applied only in areas where mosquito noise is likely to reside.

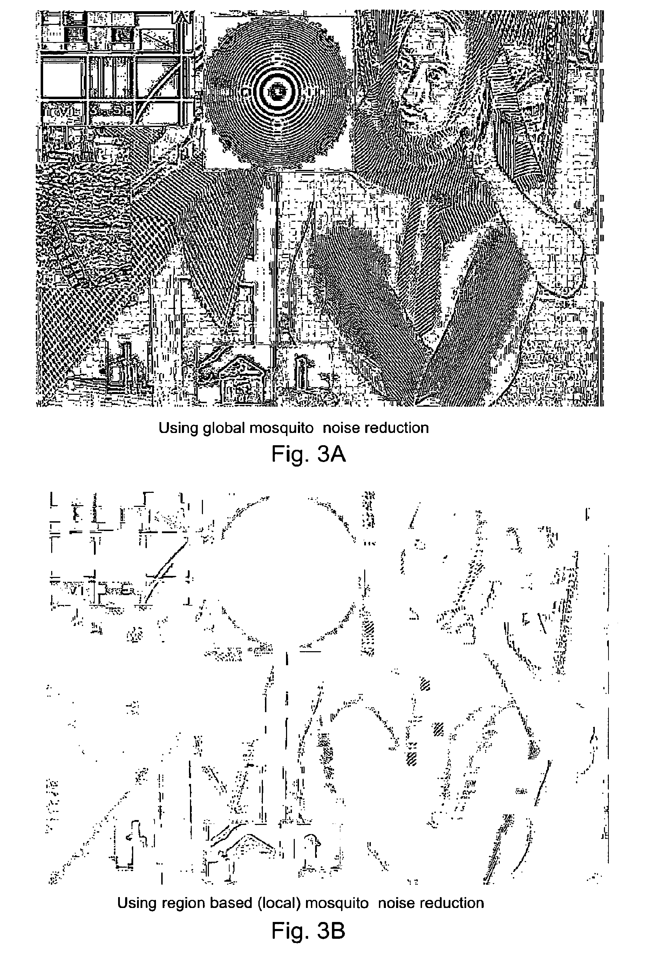

Fig. 3 shows an exemplary reduction of mosquito noise using the adaptive mosquito noise reduction system 200. One should note the stark reduction in overall mosquito noise reduction when compared with conventional global mosquito noise reduction protocols shown earlier in Fig. 1A.

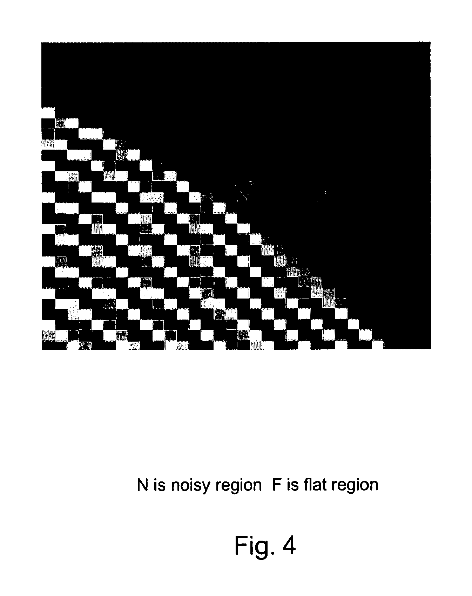

In order to locally apply a pre-selected mosquito noise reduction protocol, a region detector first determines a probable location of the original MPEG blocks and, once located, determine if the block contains mosquito noise or not. As previously mentioned, an edge must exist in the MPEG block for mosquito noise to be generated, therefore a "dirty" block must also be qualified by the existence of an edge, so as to not mistake Gaussian noise as MPEG noise. The sections below describe the elements needed to determine a region, and whether it should be corrected or not. In the following discussion, a region includes an array of 8 x 8 pixels. A noisy (or "dirty") region shows a large 2D spatial fluctuation (region N of Fig. 4) whereas a flat region is a low spatial fluctuation region (shown as region F of Fig. 4) and an indicator can be set (to 0 or 1, for example) to indicate a dirty region.

Hereinafter, mosquito noise processing pixel $P_{i,j}$ is Y-channel grey level at $i$ (column number) and $j$ (row number), and Eq 1.1 and 1.2 define the absolute of 2$^{nd}$ order differential of horizontal and vertical grey level.

$$\Delta x_{i,j} = \left| -P_{i-1,j} + 2 * P_{i,j} - P_{i+1,j} \right| \tag{1.1}$$

$$\Delta y_{i,j} = \left| -P_{i,j-1} + 2 * P_{i,j} - P_{i,j+1} \right| \tag{1.2}$$

Equation (1.3) ...... (1.8) define 'left horizontal strip' variations.

$$X_{i,j-4}^{L} = \sum_{m=i-8}^{i} \Delta x_{m,j-4} \tag{1.3}$$

$$X_{i,j-4}^{R} = \sum_{m=i}^{i+8} \Delta x_{m,j-4} \tag{1.4}$$

$$X_{i,j-8} = \sum_{m=i-8}^{i} \Delta x_{m,j-8} \tag{1.5}$$

$$X_{i,j-7} = \sum_{m=i-8}^{i} \Delta x_{m,j-7} \qquad (1.6)$$

$$X_{i,j} = \sum_{m=i-8}^{i} \Delta x_{m,j} \qquad (1.7)$$

$$X_{i,j+1} = \sum_{m=i-8}^{i} \Delta x_{m,j+1} \qquad (1.8)$$

Equation (1.9) ...... (1.11) define 'right vertical strip' variations.

$$Y_{i-1,j} = \sum_{m=j-8}^{j} \Delta y_{i-1,m} \qquad (1.9)$$

$$Y_{i,j} = \sum_{m=j-8}^{j} \Delta y_{i,m} \qquad (1.10)$$

$$Y_{i-4,j} = \sum_{m=j-8}^{j} \Delta y_{i-4,m} \qquad (1.11)$$

All the following search variations are used as basic elements in region detection that will be described below.

$$A = X_{i,j-4} \qquad (1.12)$$

$$B = X_{i,j-4} \qquad (1.13)$$

$$C = Y_{i-1,j} \qquad (1.14)$$

$$D = Y_{i-1,j} \qquad (1.15)$$

$$E = X_{i,j-8} \qquad (1.16)$$

$$F = X_{i,j-7} \tag{1.17}$$

$$G = X_{i,j} \tag{1.18}$$

$$H = X_{i,j+1} \tag{1.19}$$

$$I = Y_{i-4,j} \tag{1.20}$$

As previously mentioned, an edge must exist in the MPEG block for mosquito noise to be generated, therefore a "dirty" block or region (i.e., one with mosquito noise) must also be qualified by the existence of an edge, so as to not mistake Gaussian noise as MPEG noise. The sections below and the corresponding figures describe the elements needed to determine a region, and whether it should be corrected or not (i.e., have mosquito noise).

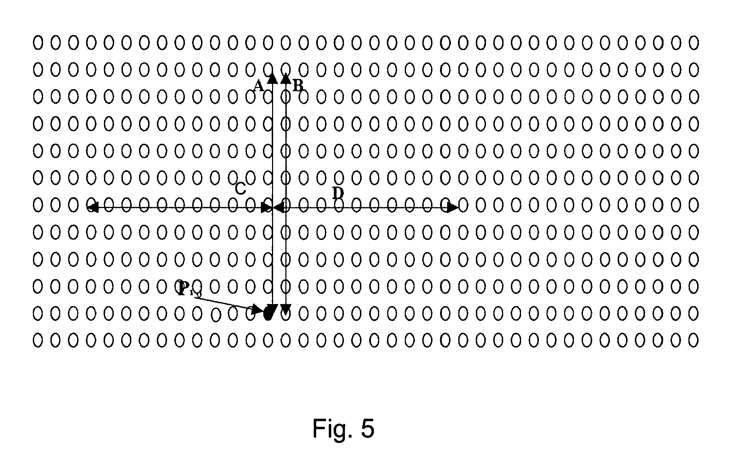

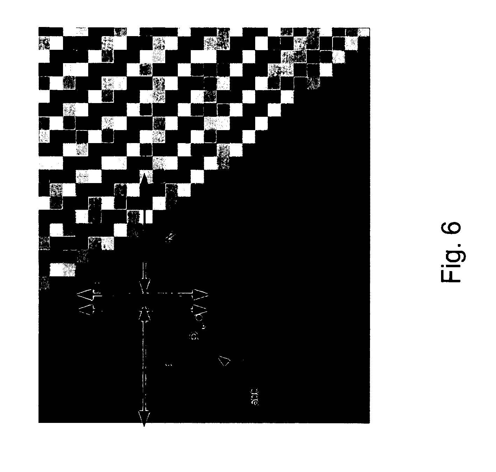

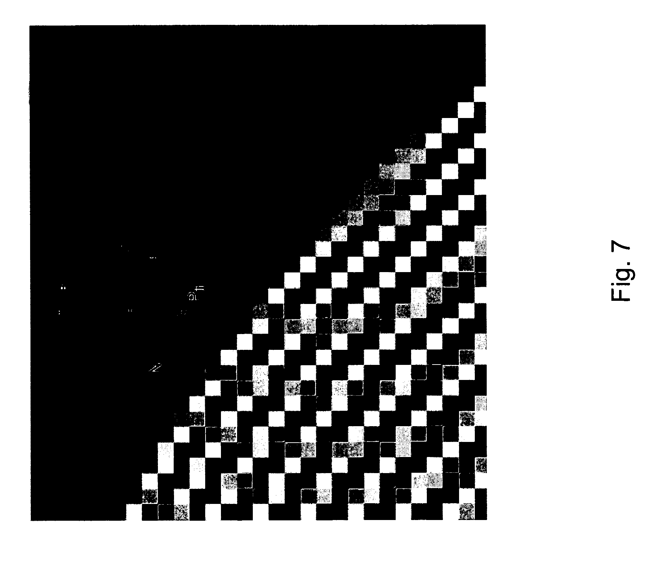

Figs 5 - 7 illustrate representative region detection kernels used to locate MPEG blocks and ascertain if mosquito noise is present. Fig. 5 illustrates a kernel 500 used in region detection formed of search variations {A, B, C, D} defined above with respect to pixel $P_{ij}$. As seen in Figs. 6 and 7, a mosquito noise region (N) which can be detected by the region detection kernel 500. Visually, Fig. 6 illustrates that in the case of mosquito noise is present when search variations {A, C} are 'small' whereas search variations {B. D} are 'large' whereas in Fig. 7, search variations {A, C} are 'large' and search variations {B, D} are 'small'.

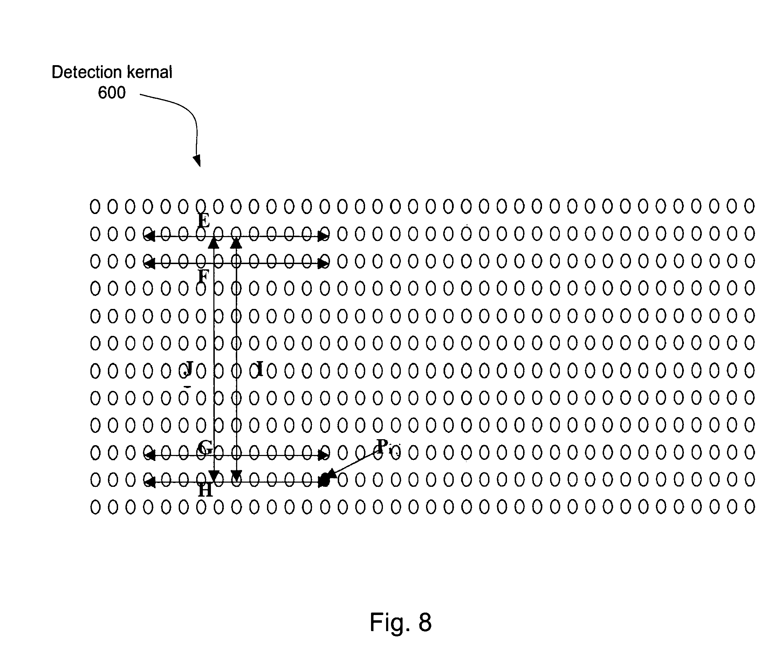

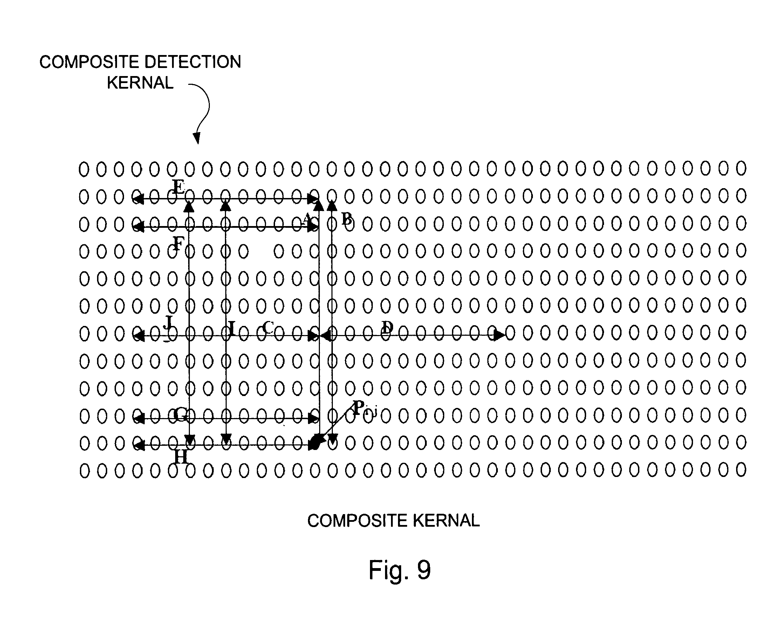

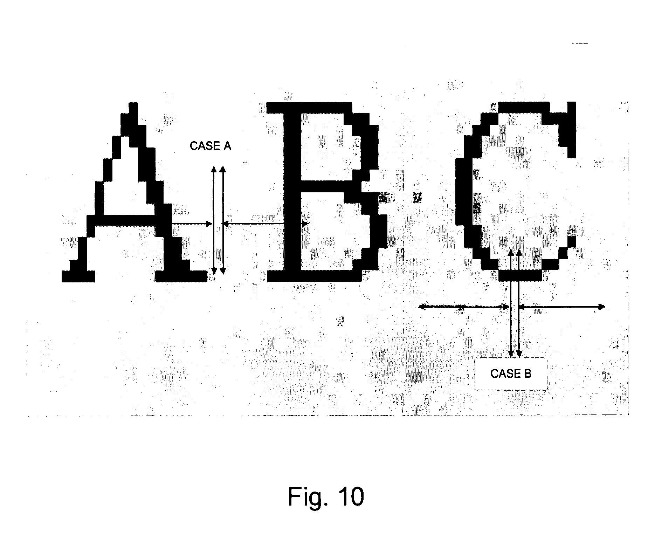

Fig. 8 illustrates a second detection kernel 600 that when used in conjunction with the first detection kernel 500 to form a composite kernel 700 (shown in Fig.9) is used in region detection in those situations illustrated in Fig. 10. For example, in Fig. 10 the first region detection kernel 500 alone cannot detect the 'dirty' mosquito noise (N) regions. For example, the first detection kernel 500 has failed in "Case A" and "Case B" to detect mosquito noise since there are no horizontal borders around the mosquito noise regions N. Based on these observations, the vertical based second region detection kernel 600 becomes necessary for the mosquito areas in which there are no horizontal borders around them.

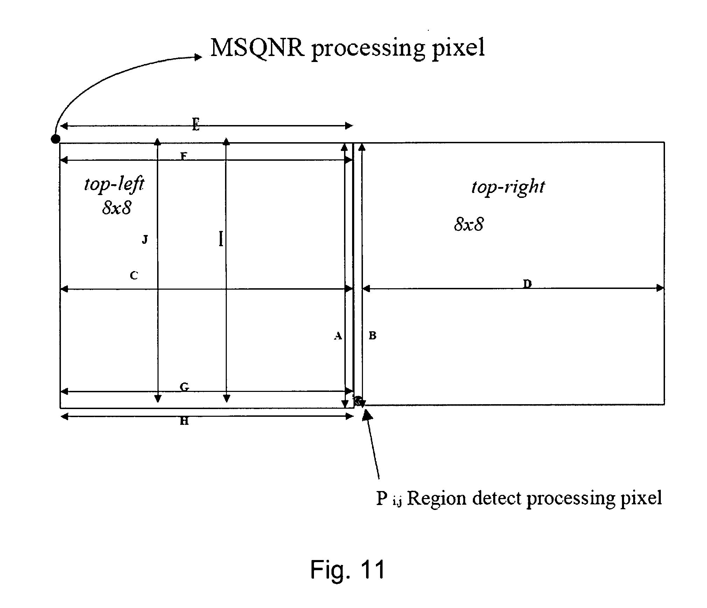

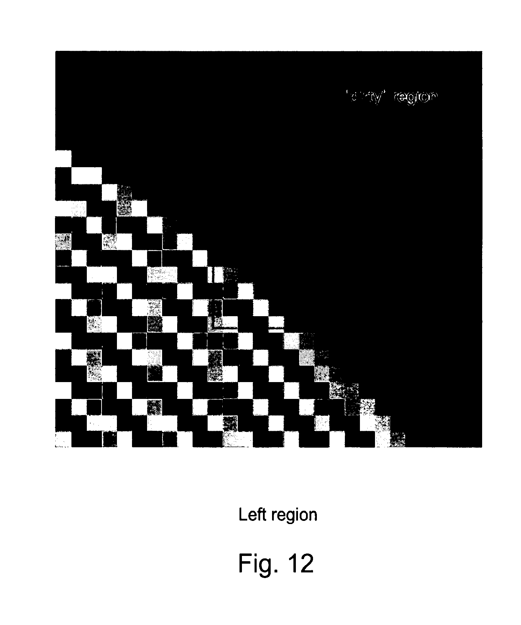

As previously discussed, since mosquito noise is caused by special transition there should be some transition somewhere in a mosquito region. Accordingly, there are two types of transition detection. One is for left and right region and another one is for top/bottom region. Left and right transition detection is more emphasis for horizontal transition detection. Horizontal transition is detected at for 4 corners of 8x8 pixels matrix of left or right regions. A transition flag will be set to 1, if there is transition is detected. Top/bottom transition is more emphasis for vertical transition detection. Vertical transition is detected at 8x8 pixels region. The transition flag will be set to 1, if there is transition is detected. Basically, mosquito noise regions can be classified as four different regions as illustrated in Fig. 11 as left region, right region, bottom region and top region and also shown in FIGs. 12 thru 15.

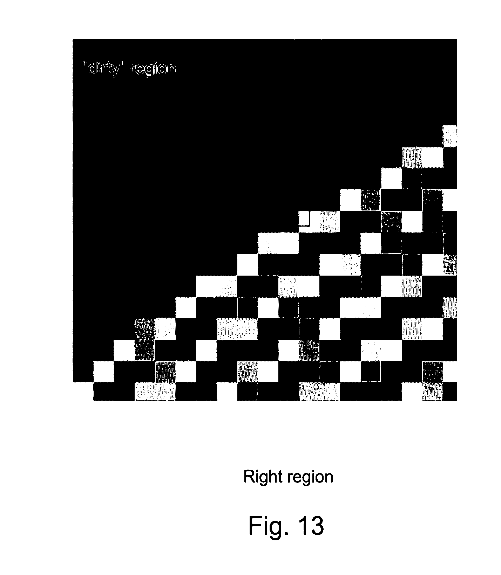

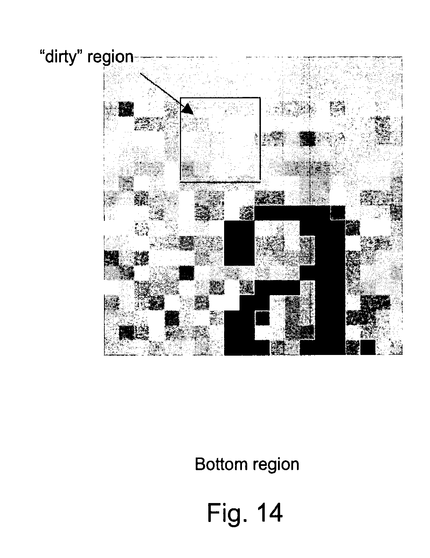

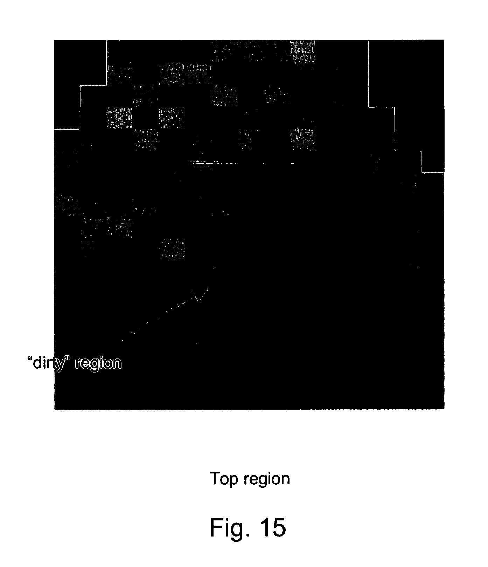

Accordingly, Fig. 12 shows a representative left region where a mosquito noise region N is on the left of the region detect kernel 500 whereas Fig. 13 shows a representative right region where a mosquito noise region N is on the right of the region detect kernel 500. For top and bottom regions, (Figs. 14 and 15, respectively) the bottom region is located under the region detection kernel 600 and the top region is above the region detection kernel 600.

More specifically, for a left region:

$$\text{Threshold\_Low\_Y} \ < \ A \ < \ \text{Threshold\_High\_Y}$$

And

$$\text{Threshold\_Low\_X} \ < \ C \ < \ \text{Threshold\_High\_X}$$

And

$$B \ < \ \text{Threshold\_Min\_Y}$$

And

$$D \ < \ \text{Threshold\_Min\_X} \qquad\qquad (1.21)$$

Then

$$\text{Left region} \ = \ \underset{\substack{m=j-7 \\ n=i-7}}{\in}^{i,j} P_{n,m} \qquad\qquad (1.22)$$

For a right region, if

$$((\text{Threshold\_Low\_Y} \ < \ B \ < \ \text{Threshold\_High\_Y})$$

And

$$\text{Threshold\_Low\_X} \ < \ D \ < \ \text{Threshold\_High\_X}))$$

And

$$A \ < \ \text{Threshold\_Min\_Y}$$

And

$$C \ < \ \text{Threshold\_Min\_X} \qquad\qquad (1.23)$$

Then

$$\text{Right region} \ = \ \underset{\substack{m=j-7 \\ n=i}}{\in}^{i+7,j} P_{n,m} \qquad\qquad (1.24)$$

For a bottom region, if

$$( ( \text{Threshold\_Low\_Y2} < I < \text{Threshold\_High\_Y2} )$$

$$\text{Or}$$

$$(\text{Threshold\_Low\_Y2} < J < \text{Threshold\_High\_Y2} ))$$

$$\text{And}$$

$$\text{Threshold\_Low\_X2} < F < \text{Threshold\_High\_X2}$$

$$\text{And}$$

$$E < \text{Threshold\_Min\_X2} \tag{1.25}$$

Then

$$\text{Bottom region} = \mathop{\in}_{\substack{m=j-7 \\ n=i-7}}^{i,j} P_{n,m} \tag{1.26}$$

For top region detection, if

$$(( \text{Threshold\_Low\_Y2} < I < \text{Threshold\_High\_Y2} )$$

$$\text{Or}$$

$$( \text{Threshold\_Low\_Y2} < J < \text{Threshold\_High\_Y2} ))$$

$$\text{And}$$

$$\text{Threshold\_Low\_X2} < G < \text{Threshold\_High\_X2}$$

$$\text{And}$$

$$H < \text{Threshold\_Min\_X2} \tag{1.27}$$

Then

$$\text{Top region} = \mathop{\in}_{\substack{m=j-7 \\ n=i-7}}^{i,j} P_{n,m} \tag{1.28}$$

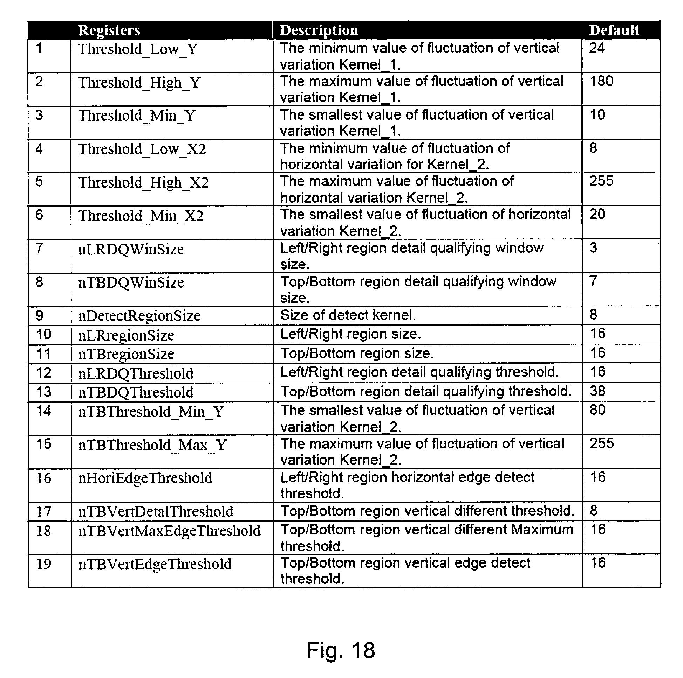

where, Threshold_Low_Y, Threshold_High_Y, Threshold_Low_X, Threshold_High_X, Threshold_High_X, Threshold_Min_Y and Threshold_Min_X are pre-determined numbers (representative values of which are shown in Fig. 18 in Table 1).

In addition to the composite region detection kernel 700, edge detection is also required in order to more accurately determine the mosquito region to which mosquito noise reduction processing will be implemented. Horizontal edge detection (ED) operation is defined as the following:

$$ED = \Delta x_{i,j} = | P_{i,j} - P_{i-1,j} | \tag{1.29}$$

where, sub-index i runs from 0 to width of image.

and for vertical edge detection,

$$ED = \Delta y_{i,j} = | P_{i,j} - P_{i,j-1} |$$ (1.30)

And also, a logical processing,

If ED > ThresholdEdge then ED=1 else ED=0.

Embodiments of the invention, including the apparatus disclosed herein, can be implemented in digital electronic circuitry, or in computer hardware, firmware, software, or in combinations of them. Apparatus embodiments of the invention can be implemented in a computer program product tangibly embodied in a machine-readable storage device for execution by a programmable processor; and method steps of the invention can be performed by a programmable processor executing a program of instructions to perform functions of the invention by operating on input data and generating output. Embodiments of the invention can be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language can be a compiled or interpreted language.

Suitable processors include, by way of example, both general and special purpose microprocessors. Generally, a processor will receive instructions and data from a read-only memory and/or a random access memory. Generally, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by, or incorporated in, ASICs (application-specific integrated circuits).

A number of implementations of the invention have been described. Nevertheless, it will be understood that various modifications may be made without departing from the scope of the invention. Accordingly, other embodiments are within the scope of the following claims.

**Claims**

1. A method of reducing mosquito noise of a video signal, the method comprising:

   determining a border of a block of pixels included in an image; and
   if a region surrounded by the border has mosquito noise, then
   applying a mosquito noise reduction operation on the region.

2. A method as recited in claim 1, wherein the determining a border comprises:

   generating a composite detection kernel; and
   applying the composite detection kernel to the video signal.

3. A method as recited in claim 2, wherein the composite detection kernel includes horizontal variation calculations and vertical variation calculations.

4. A method as recited in claim 3 further comprising:

   inhibiting mosquito noise reduction at a horizontal edge ED.

5. A method as recited in claim 4, wherein the inhibiting mosquito noise reduction at the horizontal edge comprises:

   detecting the horizontal edge using $ED = \Delta x_{i,j} = |P_{i,j} - P_{i-1,j}|$ where sub-index $i$ runs from 0 to width of the image.

6. A method as recited in claim 5, if ED is greater than a ThresholdEdge value, then an edge is detected and ED=1, else no edge is detected and ED=0.

**7.** A method as recited in claim 6, inhibiting mosquito noise reduction when the edge is detected and ED = 1.

**8.** An apparatus for reducing mosquito noise of a video signal, the method comprising:

means for determining a border of a block of pixels; and
means for applying a mosquito noise reduction operation on the region if a region surrounded by the border has mosquito noise.

**9.** An apparatus as recited in claim 8, wherein the determining a border comprises:

means for generating a composite detection kernel; and
means for applying the composite detection kernel to the video signal.

**10.** An apparatus as recited in claim 9, wherein the composite detection kernel includes horizontal variation calculations and vertical variation calculations.

**11.** Computer program product for reducing mosquito noise of a video signal, the method comprising:

computer code for determining a border of a block of pixels;
computer code for applying a mosquito noise reduction operation on the region if a region surrounded by the border has mosquito noise; and
computer readable medium for storing the computer code.

**12.** Computer program product as recited in claim 11, wherein the determining a border comprises:

computer code for generating a composite detection kernel; and
computer code for applying the composite detection kernel to the video signal.

**13.** Computer program product as recited in claim 12, wherein the composite detection kernel includes horizontal variation calculations and vertical variation calculations.

**14.** A system for reducing mosquito noise of a video signal, comprising:

an interface arranged to receive the video signal; and
a processor coupled to the interface arranged to execute instructions to determine a border of a block of pixels included in an image, and apply a mosquito noise reduction operation on the region if a region surrounded by the border has mosquito noise.

**15.** A system as recited in claim 14, wherein the processor determines the border by generating a composite detection kernel, and applying the composite detection kernel to the video signal.

**16.** A system as recited in claim 15, wherein the composite detection kernel includes horizontal variation calculations and vertical variation calculations.

**17.** A system as recited in claim 16 wherein the processor also executes instructions to inhibit mosquito noise reduction at a horizontal edge ED.

**18.** A system as recited in claim 17, wherein instructions for inhibiting mosquito noise reduction at the horizontal edge comprises:

instructions for detecting the horizontal edge using $ED = \Delta x_{i,j} = |P_{i,j} - P_{i-1,j}|$ where sub-index $i$ runs from 0 to width of the image.

**19.** A system as recited in claim 18, wherein the instruction for detecting the horizontal edge includes instructions that when executed by the processor determine that if ED is greater than a ThresholdEdge value, then an edge is detected and the processor sets ED=1, else no edge is detected and the processor sets ED=0.

**20.** A system as recited in claim 19, wherein the processor inhibits mosquito noise reduction when the edge is detected

and ED = 1.

Mosquito Noise

Fig. 1A

Mosquito Noise

Fig. 1B

: Typical Mosquito noise region is 8x8 pixles area.

Fig. 1C

Mosquito noise is near transition area

Fig. 1D

Mosquito noise most likely near 2D transition area.

Fig. 1E

2D Transition

Fig. 1F

Checkerboard pattern

Fig. 1G

Fig. 1H

EP 1 874 058 A2

Video In

208

```
┌─────────────┐      ┌──────────────┐   ┌─────────────────────────┐   ┌──────────────┐
│ Line Buffers│ ───► │ Variation (H,V)│ ─►│ Mosquito Region Detecion│ ─►│ MSQNR Arbiter│
└─────────────┘      └──────────────┘   └─────────────────────────┘   └──────────────┘
```

202

204

┌─────────────────┐
│ Control Registers│
└─────────────────┘

┌──────────────────┐
│ MSQNR 3x3 Filter │
│       206        │
└──────────────────┘

Video Out

┌───────────────────┐
│ Data Delay Registers│
└───────────────────┘

200

Fig. 2

Using global mosquito noise reduction

Fig. 3A

Using region based (local) mosquito noise reduction

Fig. 3B

N is noisy region  F is flat region

Fig. 4

EP 1 874 058 A2

Fig. 5

22

Fig. 6

Fig. 7

Fig. 8

Detection kernal
600

EP 1 874 058 A2

COMPOSITE DETECTION
KERNAL

COMPOSITE KERNAL

Fig. 9

Fig. 10

MSQNR processing pixel

top-left
8x8

top-right

8x8

E

F

J          I

C                                    D

A   B

G

H

P i,j Region detect processing pixel

Fig. 11

EP 1 874 058 A2

Left region

Fig. 12

Right region

Fig. 13

EP 1 874 058 A2

"dirty" region

Bottom region

Fig. 14

Top region

Fig. 15

| | Registers | Description |
|---|---|---|
| 1 | Threshold_Low_Y | The minimum value of fluctuation of vertical variation Kernel_1. |
| 2 | Threshold_High_Y | The maximum value of fluctuation of vertical variation Kernel_1. |
| 3 | Threshold_Min_Y | The smallest value of fluctuation of vertical variation Kernel_1. |
| 4 | Threshold_Low_X2 | The minimum value of fluctuation of horizontal variation for Kernel_2. |
| 5 | Threshold_High_X2 | The maximum value of fluctuation of horizontal variation Kernel_2. |
| 6 | Threshold_Min_X2 | The smallest value of fluctuation of horizontal variation Kernel_2. |

**Table 1: Registers of Region Detection**

Fig. 16

EP 1 874 058 A2

Edge detection and 3x3 MSQNR

$\Delta x_{i,j}$   $\Delta x_{i,j}$

Edge detection processing

A  B

C  D

$P_{i,j}$

Fig. 17

| | Registers | Description | Default |
|---|---|---|---|
| 1 | Threshold_Low_Y | The minimum value of fluctuation of vertical variation Kernel_1. | 24 |
| 2 | Threshold_High_Y | The maximum value of fluctuation of vertical variation Kernel_1. | 180 |
| 3 | Threshold_Min_Y | The smallest value of fluctuation of vertical variation Kernel_1. | 10 |
| 4 | Threshold_Low_X2 | The minimum value of fluctuation of horizontal variation for Kernel_2. | 8 |
| 5 | Threshold_High_X2 | The maximum value of fluctuation of horizontal variation Kernel_2. | 255 |
| 6 | Threshold_Min_X2 | The smallest value of fluctuation of horizontal variation Kernel_2. | 20 |
| 7 | nLRDQWinSize | Left/Right region detail qualifying window size. | 3 |
| 8 | nTBDQWinSize | Top/Bottom region detail qualifying window size. | 7 |
| 9 | nDetectRegionSize | Size of detect kernel. | 8 |
| 10 | nLRregionSize | Left/Right region size. | 16 |
| 11 | nTBregionSize | Top/Bottom region size. | 16 |
| 12 | nLRDQThreshold | Left/Right region detail qualifying threshold. | 16 |
| 13 | nTBDQThreshold | Top/Bottom region detail qualifying threshold. | 38 |
| 14 | nTBThreshold_Min_Y | The smallest value of fluctuation of vertical variation Kernel_2. | 80 |
| 15 | nTBThreshold_Max_Y | The maximum value of fluctuation of vertical variation Kernel_2. | 255 |
| 16 | nHoriEdgeThreshold | Left/Right region horizontal edge detect threshold. | 16 |
| 17 | nTBVertDetalThreshold | Top/Bottom region vertical different threshold. | 8 |
| 18 | nTBVertMaxEdgeThreshold | Top/Bottom region vertical different Maximum threshold. | 16 |
| 19 | nTBVertEdgeThreshold | Top/Bottom region vertical edge detect threshold. | 16 |

## Fig. 18

# Table 1

nHoriEdgeThreshold: is used to set the regions detection's horizontal edge detection threshold. All regions, include left, right, top/bottom will use same edge detection threshold.

nTBVertDetalThreshold: is used to set the threshold of two each other adjacent pixels in Top/Bottom region vertical edge detection.

nTBVertMaxEdgeThreshold: is used to set the threshold of two adjacent pixels in Top/Bottom region vertical edge detection.

nTBVertEdgeThreshold: is used to set the Top/Bottom region detection's vertical edge detection thresholds.

nLRDQWinSize: is used to set the window size of left or right region detail qualifying.

nTBDQWinSize: is used to set the window size of top/bottom region detail qualifying.

nDetectRegionSize: is used to set the all region detection's window size. It will determine how many pairs variation are going to be used for region detection kernel.

nLRregionSize: is used to set the mosquito dirty region window size for left or right region.

nTBDQWinSize: is used to set the mosquito dirty region window size for top/bottom region.

nThreshold_Min_Y: is used to set the minimum value of vertical variations.

nThreshold_Low_Y: is used to set the median value of vertical variations.

nThreshold_High_Y: is used to set the maximum value of vertical variations.

nLRDQThreshold: is used to set the minimum value of detail qualifying for left or right regions.

# Fig. 19